# FASCICULE DE BREVET EUROPEEN

(11) **EP 0 710 781 B1**
(45) Date de publication et mention de la délivrance du brevet: **22.07.1998**
(21) Numéro de dépôt: 95402445.1
(22) Date de dépôt: 03.11.1995
(51) Int. Cl.: F16F 15/121, F16D 3/06

(54) **Dispositif d'accouplement entre deux arbres**
Kupplungseinheit zwischen zwei Wellen
Coupling unit between two axles

(30) Priorité: 03.11.1994 FR 9413118
(43) Date de publication de la demande: 08.05.1996
(73) Titulaire: VALEO, 75017 Paris (FR)
(72) Inventeur: Lefevre, Gérard, F-80480 Vers Sur Selle (FR)
(74) Mandataire: Gamonal, Didier

(56) Documents cités:
- DE-C- 840 941
- FR-A- 2 655 116
- GB-A- 2 231 124
- US-A- 4 136 532
- US-A- 4 473 317

## Description

L'invention concerne un dispositif d'accouplement entre deux arbres alignés ou sensiblement alignés, respectivement un arbre menant et un arbre mené, le dispositif comportant des moyens d'amortissement élastique à action circonférentielle, connus en soi, mécaniquement interposés entre les deux arbres.

Le dispositif d'accouplement conforme à l'invention est plus particulièrement destiné à être interposé, dans un véhicule automobile à traction électrique, entre l'arbre du moteur électrique et l'arbre d'entrée d'une boite de vitesses.

Dans un véhicule automobile équipé d'un moteur électrique, le couplage entre l'arbre d'entraînement du moteur électrique et un arbre d'entrée de la boite de vitesses, en principe alignés, pose les problèmes suivants:

La distance entre les deux bouts d'arbre en regard, destinés à être réunis par l'intermédiaire du dispositif d'accouplement, peut être différente d'un véhicule à l'autre, en raison des tolérances de montage.

En fonctionnement, l'arbre du moteur électrique peut se déplacer axialement de quelques millimètres, ce déplacement ne devant pas se répercuter de façon sensible sur l'arbre d'entrée de la boîte de vitesses.

Il existe généralement un léger décalage axial entre les deux arbres.

Par conséquent, on attend d'un dispositif d'accouplement de ce genre, outre de pouvoir absorber les pointes de couple grâce aux moyens d'amortissement élastique à action circonférentielle, de pouvoir compenser les variations de distance axiales entre les deux arbres et de pouvoir absorber un éventuel décalage axial entre les deux arbres, sans que des contraintes se répercutent dans les moyens d'amortissement.

En outre, un tel dispositif d'accouplement doit pouvoir se monter facilement, de préférence sans fixation sur l'un ou l'autre des deux arbres.

L'invention permet se résoudre tous ces problèmes.

Plus précisément, l'invention concerne un dispositif d'accouplement entre deux arbres sensiblement alignés, du type comprenant deux manchons respectivement solidaires en rotation des deux arbres et des moyens d'amortissement élastique à action circonférentielle mécaniquement interposés entre les deux manchons. Un tel dispositif est connu de DE-C-840 941. L'invention est caractérisée en ce qu'un premier manchon précité adapté à être monté librement axialement sur un arbre correspondant est muni d'un fond formant butée axiale et en ce que des moyens élastiques à action axiale sont montés en appui sur ledit fond et s'étendent dans ledit manchon pour s'appliquer contre le bout de l'arbre engagé dans ce manchon.

D'une façon classique, les moyens d'amortissement élastique à action circonférentielle comportent deux parties rotatives l'une par rapport à l'autre à l'encontre de ressorts de rappel en position neutre. L'une des parties est fixée à une pièce de liaison dudit premier manchon tandis que le second manchon forme un moyeu solidarisé en rotation à l'arbre sur lequel il est monté. Ce second manchon comporte des dentures extérieures et l'autre partie desdits moyens d'amortissement élastique comporte un voile de moyeu muni de dentures intérieures en prise avec les dentures extérieures dudit second manchon.

Dans un mode de réalisation possible, chaque manchon est crénelé intérieurement et engagé coulissant sur une portion crénelée correspondante de l'arbre sur lequel il est engagé. Le manchon qui ne comporte pas les moyens élastiques à action axiale est de préférence en butée contre un épaulement de l'arbre sur lequel il est monté.

D'autre part, selon un mode de réalisation préféré, la partie des moyens d'amortissement élastique à action circonférentielle qui est assemblée à ladite pièce de liaison comporte, de façon connue en soi, deux flasques annulaires ou rondelles de guidage, s'étendant radialement vers l'extérieur dudit second manchon et disposés de part et d'autre dudit voile, axialement. Les ressorts de rappel en position neutre sont mécaniquement interposés entre lesdites rondelles de guidage et ledit voile, en étant logés dans des fenêtres de ceux-ci. Pour compenser un éventuel désalignement des deux arbres précités, les rondelles de guidage peuvent être montées avec jeu radial sur des portées cylindriques extérieures dudit second manchon. De même, un jeu radial comparable peut être prévu entre les dentures mâle et femelle du second manchon et du voile. Ce jeu est de préférence supérieur au jeu radial précédent pour ménager le voile.

L'invention sera mieux comprise et d'autres avantages de celle-ci apparaîtront plus clairement à la lumière de la description qui va suivre d'un mode de réalisation préféré, donnée uniquement à titre d'exemple et faite en référence aux dessins annexés dans lesquels:

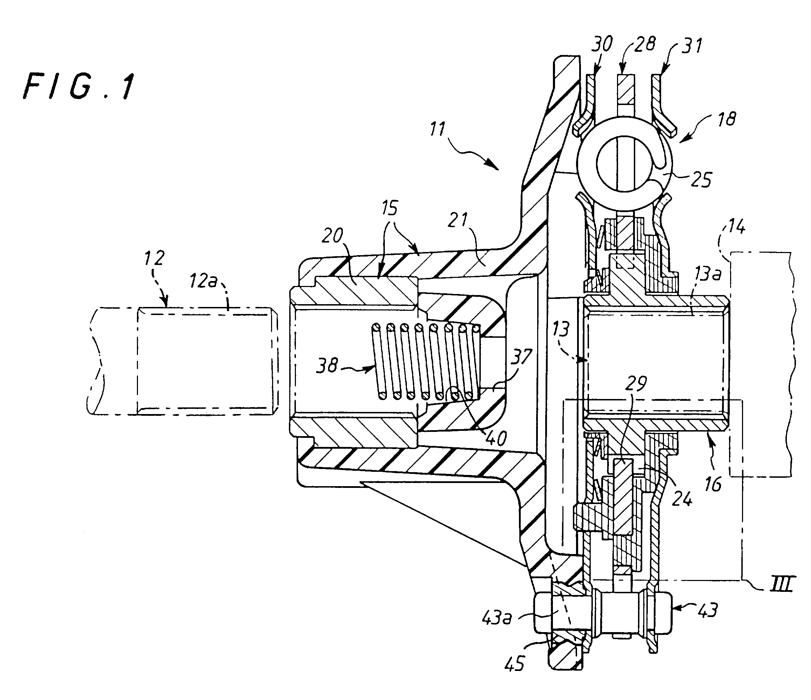

- la figure 1 est une vue en coupe axiale du dispositif d'accouplement conforme à l'invention;
- la figure 2 est une vue selon la flèche II de la figure 1; et
- la figure 3 est une vue de détail à plus grande échelle de l'encadré III de la figure 1.

Sur les dessins, on a représenté un dispositif d'accouplement 11 entre deux arbres sensiblement alignés. Ces arbres, représentés en trait fantôme, sont respectivement l'arbre de sortie d'un moteur électrique 12 et l'arbre d'entrée d'une boîte de vitesses 13. Le dispositif 11 est représenté monté sur l'arbre 13, l'arbre 12 n'étant pas en place. Chaque arbre comporte une portion cannelée 12a, 13a par laquelle il peut être accouplé en rotation avec le dispositif d'accouplement, sans immobilisation axiale. L'arbre d'entrée de la boîte de vitesses 13 comporte néanmoins un épaulement 14 constituant une sorte de butée axiale pour le dispositif d'accouplement.

Le dispositif d'accouplement 11 est du type comprenant deux manchons 15, 16 respectivement solidaires en rotation des deux arbres 12, 13 mais avec possibilité de coulissement axial, chaque manchon étant cannelé intérieurement pour sa liaison en rotation avec l'arbre sur lequel il est monté. Le dispositif d'accouplement comporte en outre des moyens d'amortissement élastique à action circonférentielle 18 mécaniquement interposés entre les deux manchons 15, 16. Par commodité, on appellera dans la suite du texte "premier manchon" celui, 15, qui est monté sur l'arbre du moteur et "second manchon" celui, 16, qui est monté sur l'arbre de la boîte de vitesses, étant entendu que l'agencement conforme à l'invention peut être inversé.

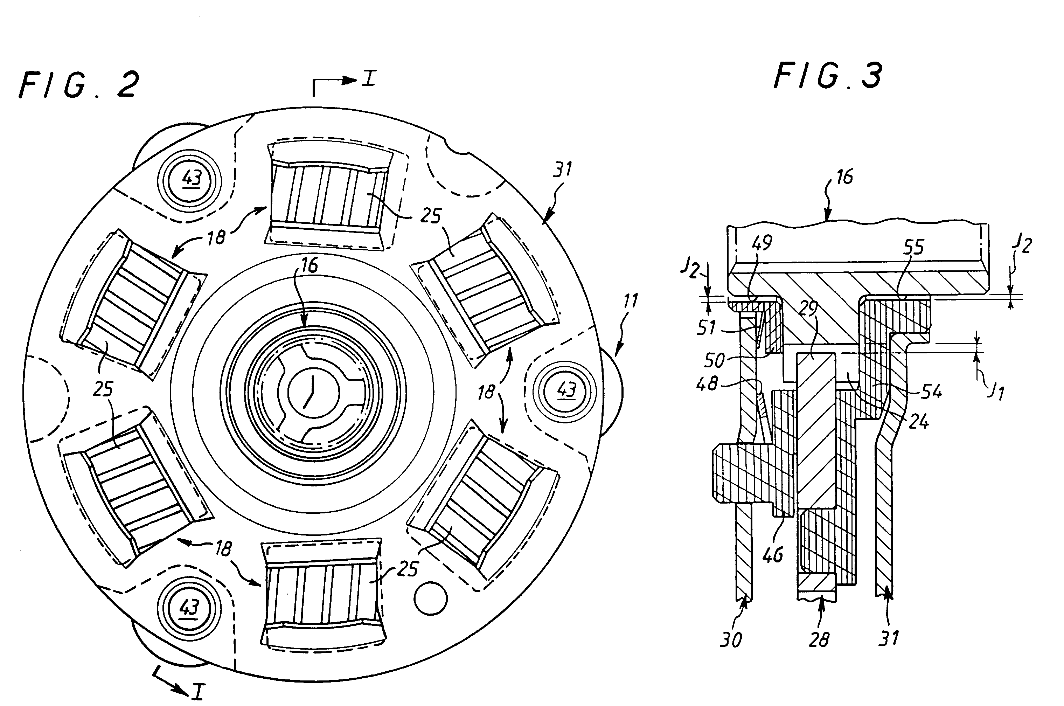

Dans l'exemple représenté, ledit premier manchon 15 est essentiellement constitué d'un tronçon métallique tubulaire 20 cannelé intérieurement (pour son montage sur l'arbre 12) et d'une pièce de liaison 21 ayant sensiblement la forme d'une cloche recouvrant et protégeant tout un côté desdits moyens d'amortissement à action circonférentielle 18. Cette pièce de liaison 21 peut être en matériau synthétique ou en alliage léger, notamment en alliage d'aluminium, tandis que le tronçon tubulaire 20, de préférence en acier, est emprisonné dans ladite pièce de liaison 21. Par exemple, cette dernière peut être surmoulée sur ledit tronçon 20. Par ailleurs, ledit second manchon 16, en prise par ses cannelures avec l'arbre d'entrée 13 de la boîte de vitesses, forme un moyeu qui comporte des dentures extérieures 24 pour son couplage auxdits moyens d'amortissement élastique. Plus précisément, lesdits moyens d'amortissement élastique à action circonférentielle 18 comportent deux parties rotatives l'une par rapport à l'autre à l'encontre de ressorts de rappel 25 en position neutre. L'une des parties est fixée à la pièce de liaison dudit premier manchon, tandis que l'autre partie comporte un voile de moyeu 28 muni de dentures intérieures 29 en prise avec les dentures extérieures dudit second manchon. Le couplage en rotation entre les dentures extérieures du moyeu et les dentures intérieures du voile est réalisé sans jeu circonférentiel (au jeu de montage près) mais avec un jeu radial J₁ (voir figure 3). La partie des moyens d'amortissement élastique qui est assemblée à ladite pièce de liaison comporte, de façon connue en soi, deux flasques annulaires ou rondelles de guidage 30, 31 s'étendant radialement vers l'extérieur dudit second manchon 16 et disposées de part et d'autre dudit voile 28, axialement. Les ressorts 25, ici à action circonférentielle, sont mécaniquement interposés entre lesdites rondelles de guidage et ledit voile en étant logés dans des fenêtres en vis-à-vis de ceux-ci.

Selon une caractéristique remarquable de l'invention, ledit premier manchon 15, qui est monté librement axialement sur l'arbre du moteur, grâce à la coopération des cannelures, est muni d'un fond formant butée axiale 37, défini ici dans la pièce de liaison 21 tandis que des moyens élastiques à action axiale 38 sont montés en appui sur ledit fond et s'étendent dans ledit manchon, plus précisément dans ledit tronçon métallique tubulaire 20, pour s'appliquer contre le bout de l'arbre 12 engagé dans ce manchon.

Comme représenté, la pièce de liaison comporte une cavité axiale 40 définissant le fond formant butée axiale précité et les moyens élastiques à action axiale sont constitués par un ressort hélicoïdal installé dans cette cavité et engagé pour partie dans le tronçon métallique tubulaire 20. La cavité axiale 40 a une paroi sensiblement tronconique de sorte que les spires d'extrémité du ressort hélicoïdal 38 sont montées en force au fond de cette cavité pour solidariser le ressort à la pièce de liaison. Par conséquent, le ressort 38 fait partie intégrante du dispositif d'accouplement et ne risque pas d'être perdu avant ou pendant les opérations de montage.

Les rondelles de guidage 30, 31 sont solidarisées entre elles par des colonnettes d'entretoisement 43, d'orientation axiale. Dans l'exemple représenté, trois colonnettes 43 sont prévues. Cet agencement est classique pour de tels moyens d'amortissement élastique, les colonnettes 43 traversant à jeu circonférentiel des échancrures pratiquées à la périphérie externe du voile 28. Cependant, lesdites colonnettes 43 (ou au moins certaines d'entre elles) sont mises à profit pour l'assemblage de la pièce de liaison 15 et des moyens d'amortissement élastique à action circonférentielle 18. Chaque colonnette comporte un prolongement 43a fixé par rivetage à la pièce de liaison. Celle-ci comporte donc ici trois trous dans lesquels les prolongements des colonnettes sont engagés et rivetés. Avantageusement, la pièce de liaison 21 comporte des inserts 45 en acier ou en matériau dur analogue dans lesquels sont définis les trous de montage desdits prolongements 43a. Ceux-ci sont donc engagés dans les inserts 45 et rivetés à eux. Ainsi, la pièce de liaison 21 peut être en matériau relativement plus tendre et plus léger, comme par exemple en aluminium ou en alliage d'aluminium ou en matériau composite, la présence des inserts permettant l'assemblage des colonnettes, sans risque de détérioration de la pièce de liaison.

D'autre part, des moyens de frottement sont agencés entre les deux parties précitées des moyens d'amortissement élastique. Comme cela apparaît clairement sur la figure 3, une bague de frottement 46 est solidaire en rotation de l'une 30 des rondelles de guidage et maintenue en appui axial contre le voile 28 par l'intermédiaire d'une rondelle élastique 48. Cette même rondelle de guidage 30 est montée sur une portée cylindrique extérieure 49 dudit second manchon 16 par l'intermédiaire d'une bague 50 formant palier. Une rondelle élastique à action axiale 51 est interposée entre cette bague 50 et ladite rondelle de guidage 30. Une autre bague 54 formant palier est montée sur une autre portée cylindrique extérieure 55 dudit second manchon; elle est solidaire en rotation du voile de moyeu 28 afin de contrôler les frottements parasites des moyens d'amortissement 18. L'autre rondelle de guidage 31 est installée sur cette bague 54. Les deux bagues 50, 54 formant paliers se situent de part et d'autre des dentures extérieures 24 dudit second manchon. Chacune de ces bagues 50, 54 a un diamètre intérieur quelque peu supérieur à celui de la portée cylindrique extérieure sur laquelle elle est montée. Ceci définit donc un jeu radial J₂. Les jeux J₁ et J₂ permettent de compenser un éventuel désalignement des deux arbres.

On notera que J₂ est inférieur à J₁ et correspond au désaxage maximum entre les arbres 12, 13 pour ménager le voile 28. En outre, la rondelle de guidage 31 est montée rotative sur le palier 54 à l'aide d'un rebord annulaire d'orientation axiale, que présente ladite rondelle à sa périphérie interne.

La bague 50, à section en forme d'équerre, est calée en rotation sur la rondelle de guidage 30 à l'aide de lunules engagées chacune dans une échancrure prévue à la périphérie interne de la rondelle de guidage 30. Les dentures 24 du manchon 26 sont formées dans une bride que présente le manchon 26 à sa périphérie externe. Ainsi, les rondelles élastiques 48, 51, ici du type rondelles Belleville, prennent appui sur la rondelle de guidage 30 pour solliciter axialement respectivement la bague 46 au contact du voile 28 et la bague 50 au contact de la bride du manchon 16, et serrer axialement le palier 54 entre l'autre rondelle de guidage 31 et la bride du manchon 16.

Le palier 54 présente à sa périphérie externe des pions engagés chacun dans une ouverture du voile 28 pour sa liaison en rotation audit voile 28.

Ainsi, le palier 54 permet de centrer la rondelle de guidage 31 (et donc les rondelles de guidage 30, 31) par rapport au voile 28. De même, la bague 46 est liée en rotation à la rondelle de guidage 31 à l'aide de pions engagés dans des ouvertures de la rondelle de guidage 30.

Les bagues 46, 50 et le palier 54 sont avantageusement en matière plastique.

Comme il ressort de la description qui précède, le montage du dispositif d'accouplement est extrêmement simple puisqu'il consiste simplement à engager ledit premier manchon 15 sur l'arbre de sortie du moteur électrique et ledit second manchon 16 sur l'arbre d'entrée de la boite de vitesses, ledit second manchon venant en butée contre l'épaulement 14 de cet arbre. Aucune autre fixation n'est nécessaire. Dès lors que le dispositif d'accouplement est ainsi installé entre les deux extrémités d'arbres, le ressort 38 se trouve comprimé et le dispositif d'accouplement est maintenu en butée contre l'épaulement 14 de l'arbre d'entrée de la boite de vitesses. Toute variation de la distance axiale entre les deux extrémités d'arbre se trouve ainsi absorbée par le ressort 38 et le dispositif d'accouplement est en permanence appliqué contre l'épaulement 14 de l'arbre 13. Ce montage est particulièrement simple et l'accouplement reste silencieux en toutes circonstances.

## Revendications

1. Dispositif d'accouplement entre deux arbres (12, 13) sensiblement alignés, du type comprenant deux manchons (15, 16) respectivement solidaires en rotation des deux arbres et des moyens d'amortissement élastique à action circonférentielle (18) mécaniquement interposés entre les deux manchons, caractérisé en ce qu'un premier manchon (15) précité adapté à être monté librement axialement sur un arbre correspondant est muni d'un fond formant butée axiale (37) et en ce que des moyens élastiques à action axiale (38) sont montés en appui sur ledit fond et s'étendent dans ledit manchon pour s'appliquer contre le bout de l'arbre (12) engagé dans ce manchon.

2. Dispositif d'accouplement selon la revendication 1, caractérisé en ce que lesdits moyens d'amortissement élastique à action circonférentielle (18) comportent deux parties rotatives l'une par rapport à l'autre à l'encontre de ressorts de rappel en position neutre (25), en ce que l'une des parties est fixée à une pièce de liaison (21) dudit premier manchon, en ce qu'un second manchon (16) précité, formant moyeu, comporte des dentures extérieures (24) et en ce que l'autre partie comporte un voile de moyeu (28) muni de dentures intérieures (29) en prise avec les dentures extérieures dudit second manchon.

3. Dispositif d'accouplement selon la revendication 2, caractérisé en ce que ladite partie assemblée à ladite pièce de liaison (21) comporte deux flasques annulaires ou rondelles de guidage (30, 31), s'étendant radialement vers l'extérieur dudit second manchon et disposées de part et d'autre dudit voile (28), axialement, lesdits ressorts (25) étant mécaniquement interposés entre lesdites rondelles de guidage et ledit voile.

4. Dispositif d'accouplement selon la revendication 3, caractérisé en ce que des moyens de frottement sont agencés entre les deux parties précitées desdits moyens d'amortissement élastique (18).

5. Dispositif d'accouplement selon la revendication 3 ou 4, caractérisé en ce que lesdites rondelles de guidage (30, 31) étant solidarisées entre elles par des colonnettes d'entretoisement (43), d'orientation axiale, certaines au moins de ces colonnettes comportent des prolongements (43a) par lesquels ladite pièce de liaison est assemblée à la partie correspondante des moyens d'amortissement élastique.

6. Dispositif d'accouplement selon la revendication 5, caractérisé en ce que ladite pièce de liaison (21) comporte des inserts en acier ou matériau dur analogue, muni de trous dans lesquels sont fixés lesdits prolongements (43a) desdites colonnettes .

7. Dispositif d'accouplement selon l'une des revendications précédentes, caractérisé en ce que ladite pièce de liaison (21) comporte une cavité axiale (40) définissant le fond formant butée axiale précité dudit premier manchon et en ce que lesdits moyens élastiques à action axiale sont constitués par un ressort hélicoïdal (38) installé dans cette cavité.

8. Dispositif d'accouplement selon la revendication 7, caractérisé en ce que des spires d'extrémité dudit ressort hélicoïdal (38) sont montées en force au fond de ladite cavité (40) pour solidariser ledit ressort à ladite pièce de liaison.

9. Dispositif d'accouplement selon la revendication 7 ou 8, caractérisé en ce que ledit premier manchon (15) comporte un tronçon métallique (20) tubulaire, cannelé intérieurement pour son accouplement à l'un des arbres cités et en ce que ce tronçon tubulaire est emprisonné dans ladite pièce de liaison (21).

10. Dispositif d'accouplement selon la revendication 9, caractérisé en ce que ladite pièce de liaison (21) est surmoulée sur ledit tronçon métallique cannelé (20).

11. Dispositif d'accouplement selon l'une des revendications 2 à 10, caractérisé en ce que ladite pièce de liaison (21) a la forme générale d'une cloche recouvrant et protégeant tout un côté desdits moyens d'amortissement à action circonférentielle (18).

12. Dispositif d'accouplement selon l'une des revendications 3 à 11, caractérisé en ce que lesdites rondelles de guidage (30, 31) sont montées avec jeu radial (J₂) sur des portées cylindriques extérieures dudit second manchon (16).

## Patentansprüche

1. Kupplungseinheit zwischen zwei in etwa fluchtenden Wellen (12, 13), umfassend zwei Muffen (15, 16), die drehfest mit den beiden Wellen verbunden sind, und umfangsmäßig wirksame elastische Dämpfungsmittel (18), die mechanisch zwischen den beiden Muffen eingefügt sind , **dadurch gekennzeichnet,** daß eine vorgenannte erste Muffe (15), die axial frei an einer entsprechenden Welle angebracht werden kann, mit einem Boden versehen ist, der einen axialen Anschlag (37) bildet, und daß axial wirksame elastische Mittel (38) in Anlage an dem besagten Boden angebracht sind und sich in der besagten Muffe erstrecken, um an dem in diese Muffe eingesetzten Ende der Welle (12) anzuliegen.

2. Kupplungseinheit nach Anspruch 1, **dadurch gekennzeichnet**, daß die besagten umfangsmäßig wirksamen elastischen Dämpfungsmittel (18) zwei im Verhältnis zueinander entgegen Rückstellfedern (25) für die Neutralstellung drehbare Teile umfassen, daß einer der Teile an einem Verbindungsstück (21) der besagten ersten Muffe befestigt ist, daß eine vorgenannte zweite Muffe (16), die eine Nabe bildet, Außenzahnungen (24) umfaßt und daß der andere Teil eine Nabenscheibe (28) umfaßt, die mit Innenzahnungen (29) versehen ist, die mit den Außenzahnungen der besagten zweiten Muffe im Eingriff stehen.

3. Kupplungseinheit nach Anspruch 2, **dadurch gekennzeichnet,** daß der besagte Teil, der an dem besagten Verbindungsstück (21) angebracht ist, zwei ringförmige Flansche oder Führungsscheiben (30, 31) umfaßt, die sich radial zur Außenseite der besagten zweiten Muffe erstrecken und beiderseits der besagten Nabenscheibe (28) axial angeordnet sind, wobei die besagten Federn (25) mechanisch zwischen den besagten Führungsscheiben und der besagten Nabenscheibe eingefügt sind.

4. Kupplungseinheit nach Anspruch 3, **dadurch gekennzeichnet,** daß Reibungsmittel zwischen den beiden vorgenannten Teilen der besagten elastischen Dämpfungsmittel (18) angeordnet sind.

5. Kupplungseinheit nach Anspruch 3 oder 4 , **dadurch gekennzeichnet,** daß, während die besagten Führungsscheiben (30, 31) durch axial ausgerichtete Distanzbolzen (43) fest miteinander verbunden sind, zumindest einige dieser Distanzbolzen Verlängerungen (43a) umfassen, durch die das besagte Verbindungsstück an dem entsprechenden Teil der elastischen Dämpfungsmittel angebracht ist.

6. Kupplungseinheit nach Anspruch 5, **dadurch gekennzeichnet,** daß das besagte Verbindungsstück (21) Einsätze aus Stahl oder einem ähnlichen harten Werkstoff umfaßt, die mit Löchern versehen sind, in denen die besagten Verlängerungen (43a) der besagten Distanzbolzen befestigt sind.

7. Kupplungseinheit nach einem der vorangehenden Ansprüche, **dadurch gekennzeichnet,** daß das besagte Verbindungsstück (21) eine axiale Vertiefung (40) umfaßt, die den vorgenannten als axialer Anschlag ausgebildeten Boden der besagten ersten Muffe bildet, und daß die besagten axial wirksamen elastischen Mittel aus einer Schraubenfeder (38) bestehen, die in diese Vertiefung eingesetzt ist.

8. Kupplungseinheit nach Anspruch 7, **dadurch gekennzeichnet,** daß die Abschlußwindungen der besagten Schraubenfeder (38) gespannt am Boden der besagten Vertiefung (40) eingesetzt sind, um die besagte Feder fest mit dem besagten Verbindungsstück zu verbinden.

9. Kupplungseinheit nach Anspruch 7 oder 8 , **dadurch gekennzeichnet,** daß die besagte erste Muffe (15) ein rohrförmiges Metallstück (20) umfaßt, das für seine Verbindung mit einer der vorgenannten Wellen innen genutet ist, und daß dieses rohrförmige Teilstück in dem besagten Verbindungsstück (21) eingeschlossen ist.

10. Kupplungseinheit nach Anspruch 9 , **dadurch gekennzeichnet,** daß das besagte Verbindungsstück (21) auf dem besagten genuteten Metallstück (20) aufgeformt ist.

11. Kupplungseinheit nach einem der Ansprüche 2 bis 10, **dadurch gekennzeichnet,** daß das besagte Verbindungsstück (21) die allgemeine Form einer Glocke hat, die eine ganze Seite der besagten umfangsmäßig wirksamen Dämpfungsmittel (18) überdeckt und schützt.

12. Kupplungseinheit nach einem der Ansprüche 3 bis 11, **dadurch gekennzeichnet,** daß die besagten Führungsscheiben (30, 31) mit radialem Spiel (J₂) auf äußeren zylindrischen Auflageflächen der besagten zweiten Muffe (16) gelagert sind.

## Claims

1. A device for coupling together two substantially aligned shafts (12, 13), of the type comprising two sleeves (15, 16), respectively fixed in rotation to the two shafts, and circumferentially acting resilient damping means (18) mechanically interposed between the two shafts, characterised in that a first said sleeve (15), adapted to be freely mounted axially on a corresponding shaft, is provided with a base defining an axial abutment (37), and in that axially acting resilient means (38) are mounted in engagement on the said base and extend in the said sleeve so as to abut against the end of the shaft (12) engaged in that sleeve.

2. A coupling device according to Claim 1, characterised in that the said circumferentially acting resilient damping means (18) comprise two parts rotatable with respect to each other against the action of springs for return to a neutral position (25), in that one of the parts is fixed to a connecting member(21) of the said first sleeve, in that a second said sleeve (16), defining a hub, includes external teeth (24), and in that the other part includes a damper plate (28) having internal teeth (29) in engagement with the external teeth of the said second sleeve.

3. A coupling device according to Claim 2, characterised in that the said part assembled to the said connecting member (21) comprises two annular plates or guide rings (30, 31), extending radially outwardly from the said second sleeve and disposed axially on either side of the said damper plate (28), the said springs (25) being interposed mechanically between the said guide rings and the said damper plate.

4. A coupling device according to Claim 3, characterised in that friction means are arranged between the two said parts of the said resilient damping means (18).

5. A coupling device according to Claim 3 or Claim 4, characterised in that, the said guide rings (30, 31) being secured to each other by axially orientated spacer bars (43), at least some of these spacer bars include extensions (43a) whereby the said connecting member is assembled to the corresponding part of the resilient damping means.

6. A coupling device according to Claim 5, characterised in that the said connecting member (21) includes inserts of steel or a similar hard material, having holes in which the said extensions (43a) of the said bars are fixed.

7. A coupling device according to one of the preceding Claims, characterised in that the said connecting member (21) includes an axial cavity (40) defining the base which defines the said axial abutment of the said first sleeve, and in that the said axially acting resilient means consist of a helical spring (38) installed in the said cavity.

8. A coupling device according to Claim 7, characterised in that the endmost turns of the said helical spring (38) are force-fitted to the base of the said cavity (40) so as to secure the said spring to the said connecting member.

9. A coupling device according to Claim 7 or Claim 8, characterised in that the said first sleeve (15) includes a tubular metallic portion (20), which is splined internally for coupling it to one of the said shafts, and in that this tubular portion is trapped within the said connecting member (21).

10. A coupling device according to Claim 9, characterised in that the said connecting member (21) is moulded on the said splined metallic portion (20).

11. A coupling device according to one of Claims 2 to 10, characterised in that the said connecting member (21) has the general form of a hat, covering and protecting all of one side of the said circumferentially acting damping means (18).

12. A coupling device according to one of Claims 3 to 11, characterised in that the said guide rings (30, 31) are mounted with a radial clearance (J₂) on external cylindrical surfaces of the said second sleeve (16).
